# FASCICULE DE BREVET EUROPEEN

(11) **EP 3 956 552 B1**
(45) Date de publication et mention de la délivrance du brevet: **15.05.2024**
(21) Numéro de dépôt: 20713296.0
(22) Date de dépôt: 26.03.2020
(51) Int. Cl.: F02B 31/08, F02F 1/42, F02B 23/10, F02B 31/00

(54) **DISPOSITIF D'ADMISSION DE GAZ AVEC DEUX CONDUITS D'ADMISSION DISSYMETRIQUES**
GAS-EINLASSVORRICHTUNG MIT ZWEI DISSYMMETRISCHEN EINLASSKANÄLEN
GAS INTAKE DEVICE WITH TWO DISSYMMETRIC INTAKE DUCTS

(30) Priorité: 16.04.2019 FR 1904026
(43) Date de publication de la demande: 23.02.2022
(73) Titulaire: IFP Energies nouvelles, 92852 Rueil-Malmaison (FR)
(72) Inventeur: GAUTROT, Xavier, 92852 RUEIL-MALMAISON CEDEX (FR); TROST, Julien, 92852 RUEIL-MALMAISON CEDEX (FR); RITTER, Martin, 92852 RUEIL-MALMAISON CEDEX (FR); KRIEGER, Arnaud, 92852 RUEIL-MALMAISON CEDEX (FR); CHARMASSON, Sébastien, 92852 RUEIL-MALMAISON CEDEX (FR)
(74) Mandataire: IFP Energies nouvelles
(86) Numéro de dépôt international: PCT/EP2020/058559
(87) Numéro de publication internationale: WO 2020/212112

(56) Documents cités:
- EP-A1- 0 537 745
- WO-A1-2015/033198
- AT-U1- 283
- DE-A1-102017 112 350

## Description

### Domaine technique

La présente invention concerne le domaine des dispositifs d'admission de gaz pour un moteur à combustion interne. La présente invention concerne en particulier les dispositifs d'admission de gaz avec deux conduits d'admission permettant de générer un mouvement aérodynamique de gaz dans le cylindre du moteur.

Ce type de moteur comprend généralement au moins un cylindre, un piston coulissant dans ce cylindre en un mouvement rectiligne alternatif, des moyens d'admission d'un comburant dans le cylindre, des moyens d'échappement de gaz brûlés du cylindre, une chambre de combustion, et des moyens d'injection pour injecter un combustible dans le cylindre.

Comme cela est généralement admis, lors de la conception d'un moteur, les contraintes de performances et d'émissions de polluants sont de plus en plus fortes et il convient donc de trouver de nouvelles solutions pour augmenter le rendement final du moteur.

L'augmentation du rendement de combustion est donc un point clé pour limiter les émissions polluantes à performances égales ou supérieures. Pour cela, l'utilisation de la totalité du carburant présent dans la chambre de combustion, par un comburant comprenant par exemple de l'air à pression ambiante, de l'air suralimenté, ou un mélange d'air (suralimenté ou non) et de gaz brûlés recirculés, est d'une grande importance.

En effet, il est nécessaire que le mélange carburé (comburant/combustible) dans la chambre de combustion soit le plus homogène possible.

De plus, afin d'assurer un bon rendement ainsi qu'une bonne vitesse de combustion, il est souhaitable d'avoir un haut niveau de turbulence, et plus spécifiquement un haut niveau d'énergie cinétique turbulente, à l'instant de l'allumage du mélange carburé et au cours de la combustion qui suit.

Ce niveau de turbulence élevé peut être atteint grâce à l'emploi d'une aérodynamique d'admission particulière, le swumble. Ce type d'aérodynamique se caractérise par le fait que le mouvement macroscopique du mélange carburé est un composé de swirl (mouvement rotatif des gaz dans le cylindre autour d'un axe vertical cylindre) et de tumble (mouvement rotatif des gaz dans le cylindre selon un axe longitudinal moteur).

Le swirl, qui est un mouvement macroscopique de rotation du mélange carburé autour d'un axe colinéaire à l'axe du cylindre, se caractérise par une bonne conservation au cours du processus d'admission et plus spécifiquement au cours de la remontée du piston. C'est un mouvement macroscopique aérodynamique qui est généralement utilisé pour les moteurs à combustion interne à allumage par compression où il est un bon moyen d'homogénéiser le mélange carburé.

Le tumble est lui aussi un mouvement macroscopique de rotation du mélange carburé mais autour d'un axe globalement perpendiculaire à l'axe du cylindre. Il a la particularité de se transformer en mouvements aérodynamiques microscopiques qui créent de la turbulence lors de la remontée du piston. C'est un mouvement macroscopique aérodynamique qui est généralement utilisé pour les moteurs à combustion interne à allumage commandé où il est un bon moyen d'obtenir une vitesse de combustion appropriée. Par ailleurs, ce mouvement est assez sensible à la géométrie de la chambre de combustion ainsi qu'à la loi de levée, aussi bien en termes d'étalement que hauteur de levée maximale.

L'utilisation du swumble permet de bénéficier des avantages des deux structures aérodynamiques détaillées ci-dessus et donc de bénéficier d'une excellente homogénéisation et d'une meilleure vitesse de combustion grâce à un niveau de turbulence plus élevée lors de la phase de compression que ce qu'on observe avec les meilleurs moteurs à allumage commandé actuels.

### Technique antérieure

Différentes solutions techniques ont été développées pour réaliser ces écoulements turbulents dans le cylindre.

Une première solution est décrite notamment dans le brevet US6606975. Cette solution consiste à piloter un volet placé dans la conduite d'admission pour générer des turbulences. Ce brevet fait apparaître en outre la notion de swumble à faible charge. Une telle solution est complexe et pénalisante pour le remplissage du cylindre.

Une deuxième solution est décrite notamment dans le brevet US5056486. Cette solution propose une définition de conduits d'admission asymétriques permettant de générer une aérodynamique complexe. Toutefois, cette solution nécessite un déphasage des ouvertures des soupapes d'admission, ce qui est pénalisant à forte charge.

Une troisième solution est décrite notamment dans les demandes de brevet DE10128500 et EP1783341. Cette solution permet de générer une aérodynamique complexe à l'aide d'appendices passifs ou actifs dans le conduit d'admission. Dans les deux cas, ces appendices limitent le remplissage du cylindre en gaz. De plus, les appendices actifs nécessitent une commande rendant la solution complexe.

Une quatrième solution est décrite notamment dans les demandes de brevet US 2008/0149063, JP 2010-261314 et US 2012160198. Cette solution consiste à générer des mouvements aérodynamiques du gaz dans le cylindre au moyen de masques placés à l'extrémité du conduit d'admission. Toutefois, pour obtenir un mouvement aérodynamique du gaz de type swumble, il semble nécessaire d'utiliser deux masques par conduit d'admission ou d'utiliser des lois de levées de soupapes spécifiques, ce qui rend cette solution complexe. De plus, les masques utilisés limitent le remplissage du cylindre en gaz. Une autre solution est décrite dans le document EP0537745A1.

De plus, les moteurs à combustion interne dont les cylindres sont pourvus de deux conduits d'admission ou des conduits siamois sont répandus (en d'autres termes des cylindres avec deux soupapes d'admission). Classiquement, ces cylindres peuvent être également pourvus de deux conduits d'échappement, et deux soupapes d'échappement, on parle alors de moteur quatre soupapes. Par rapport à la configuration à deux soupapes par cylindre, la moindre inertie mécanique d'un moteur quatre soupapes, résultant de l'allégement des pièces en mouvement, autorise des régimes moteur plus élevés, permettant ainsi un rendement et une puissance du moteur à combustion interne plus élevés.

### Résumé de l'invention

Le but de l'invention est de pallier ces inconvénients, au moyen d'un dispositif d'admission permettant d'obtenir, de manière simple, de bonnes performances du moteur, notamment avec une énergie turbulente importante et une structure aérodynamique du gaz de type swumble bien orienté dans le cylindre. Pour cela, la présente invention concerne un dispositif d'admission de gaz pour un cylindre d'un moteur à combustion interne. Le dispositif d'admission de gaz comporte deux conduits d'admission, deux soupapes d'admission, deux calibrations de la soupape d'admission, et dans chaque conduit d'admission, des moyens pour former un mouvement aérodynamique du gaz du type tumble dans le cylindres. En outre, pour chaque conduit d'admission, l'intersection entre le conduit d'admission et la calibration se fait selon une droite non parallèle au plan de la face feu. Cette inclinaison permet de générer un mouvement aérodynamique du type swirl dans le cylindre, qui se combine au tumble pour former un mouvement aérodynamique du type swumble. De plus, l'angle d'inclinaison de cette intersection est différent pour chaque conduit. Ainsi, grâce à cette dissymétrie des deux conduits d'admission, on génère un mouvement aérodynamique du gaz dans le cylindre de type swumble qui se place dans une conformation plus proche du mouvement aérodynamique du gaz de type tumble en fin de compression ce qui maximise la création d'énergie cinétique turbulente.

L'invention concerne un dispositif d'admission de gaz pour un cylindre d'un moteur à combustion interne, ledit dispositif d'admission de gaz comprenant deux conduits d'admission, une soupape d'admission disposée dans chaque conduit d'admission, une calibration de soupape disposée à une extrémité de chaque conduit d'admission et dirigée vers la face feu dudit cylindre, et au sein de chaque conduit d'admission, des moyens pour générer un mouvement aérodynamique dudit gaz au sein dudit cylindre autour d'un axe sensiblement perpendiculaire à l'axe dudit cylindre, dans lequel, à l'intrados de chacun desdits deux conduits d'admission, l'intersection entre chaque conduit d'admission et ladite calibration forme un segment de droite porté par une génératrice rectiligne formant un angle α compris entre 0 et 45° par rapport à un plan parallèle à ladite face feu dudit cylindre passant par un point d'intersection entre ledit conduit d'admission et ladite calibration. Lesdits angles α desdits deux conduits d'admission sont distincts.

Selon un mode de réalisation, la différence entre lesdits angles α desdits deux conduits d'admission est un angle δ non nul compris entre 0 et 45°, de préférence entre 0 et 15°, et préférentiellement entre 1 et 15°.

Conformément à une mise en oeuvre, ledit conduit d'admission pour lequel l'angle α le plus élevé est le conduit d'admission générant le mouvement aérodynamique du gaz dans le cylindre dont la direction est la plus proche de l'axe dudit cylindre.

Selon un aspect, ledit angle α desdits deux conduits d'admission est compris entre 0 et 20°, de préférence entre 0 et 16°.

De préférence, ledit angle α est non nul pour lesdits deux conduits d'admission.

Selon une option de réalisation, lesdits moyens pour générer un mouvement aérodynamique du gaz au sein dudit cylindre autour d'un axe sensiblement perpendiculaire à l'axe dudit cylindre sont constitués par la forme de chacun desdits deux conduits d'admission, notamment au moyen d'une forme de tremplin, et/ou d'une convergence de la section de passage desdits deux conduits d'admission, et/ou une inclinaison desdits deux conduits d'admission.

Avantageusement, lesdits deux conduits d'admission forment un conduit siamois d'admission comportant deux sorties de gaz vers ledit cylindre et deux soupapes d'admission.

Selon une mise en oeuvre, chacun desdits deux conduits d'admission comporte un masque qui obture partiellement lesdits deux conduits d'admission.

Conformément à un mode de réalisation, lesdits deux conduits d'admission sont sensiblement parallèles.

En outre, l'invention concerne un moteur à combustion interne comportant au moins un cylindre pourvu au moins d'un dispositif d'admission selon l'une des caractéristiques précédentes, d'au moins un dispositif d'échappement, et de moyens d'injection de carburant.

D'autres caractéristiques et avantages du dispositif selon l'invention, apparaîtront à la lecture de la description ci-après d'exemples non limitatifs de réalisations, en se référant aux figures annexées et décrites ci-après.

### Liste des figures

La figure 1 illustre un dispositif d'admission selon un mode de réalisation de l'invention dans sa position en mode de fonctionnement.
La figure 2 illustre des vues de l'intrados d'un conduit d'admission d'un dispositif d'admission de gaz respectivement selon l'art antérieur et selon un mode de réalisation de l'invention dans sa positionnement en mode de fonctionnement.
La figure 3 illustre des vues de l'intrados d'un dispositif d'admission de gaz dans sa position de fonctionnement selon un mode de réalisation de l'invention.
La figure 4 illustre une vue de dessus d'un cylindre équipé d'un dispositif d'admission de gaz dans sa position de fonctionnement selon un mode de réalisation de l'invention.
La figure 5 illustre deux courbes du tumble en fonction de l'angle vilebrequin (CAD = « crank angle degree »), l'une pour un conduit d'admission selon l'invention, et l'autre pour un conduit d'admission selon une réalisation non conforme à l'invention.
La figure 6 illustre deux courbes de l'énergie cinétique turbulente en fonction de l'angle vilebrequin, l'une pour un conduit d'admission selon l'invention, et l'autre pour un conduit d'admission selon une réalisation non conforme à l'invention.
La figure 7 est un graphique du compromis tumble-perméabilité pour des dispositifs d'admission selon l'art antérieur et pour le dispositif d'admission selon l'invention.

### Description des modes de réalisation

La présente invention concerne un dispositif d'admission de gaz pour un cylindre d'un moteur à combustion interne. Il s'agit d'un dispositif d'admission avec deux conduits d'admission.

Le dispositif d'admission de gaz comporte :
- deux conduits d'admission de gaz pour l'admission d'un gaz dans un cylindre,
- une soupape d'admission insérée dans chaque conduit d'admission, l'ouverture de la soupape permettant l'entrée du gaz dans le cylindre,
- une pièce de calibration de la soupape d'admission disposée à l'extrémité de chaque soupape d'admission vers le cylindre, la calibration étant dirigée vers la face feu du cylindre, la calibration de la soupape d'admission est une pièce mécanique sensiblement cylindrique dans laquelle se déplace la soupape,
- au sein de chaque conduit d'admission, des moyens de déviation du gaz pour générer un mouvement aérodynamique du gaz au sein du cylindre selon une direction perpendiculaire à l'axe du cylindre, en d'autres termes des moyens pour former un mouvement aérodynamique du gaz de type tumble,

On appelle face feu ou face combustion, le plan inférieur de la culasse (du moteur à combustion interne) orthogonal à l'axe du cylindre. La calibration de la soupape est insérée dans le plan inférieur de la culasse de manière à alimenter le cylindre en gaz.

Par rapport à la configuration à une soupape d'admission par cylindre, la moindre inertie mécanique d'un moteur avec deux soupapes d'admission par cylindre, résultant de l'allégement des pièces en mouvement, autorise des régimes moteur plus élevés, permettant ainsi un rendement et une puissance du moteur à combustion interne plus élevés.

Selon l'invention, le dispositif d'admission est formé de telle sorte que, à l'intrados de chaque conduit d'admission, l'intersection entre le conduit d'admission et la calibration de la soupape, forme un segment de droite portée par une génératrice rectiligne formant un angle α compris entre 0 et 45°, par rapport à un plan para Ilèle à la face feu et passant par un point d'intersection entre le conduit d'admission et la calibration de la soupape. On appelle intrados du conduit d'admission, la face inférieure du conduit d'admission (quand le conduit d'admission est dans sa position de fonctionnement). Ainsi, l'intersection (qui est un segment de droite) de la face inférieure du conduit d'admission avec la calibration de soupape est inclinée par rapport à un plan parallèle à la face feu. Cette inclinaison permet une déviation du gaz à l'entrée de la calibration, et a fortiori à l'entrée du cylindre. Cette déviation de gaz forme un mouvement aérodynamique du gaz dans le cylindre selon une direction parallèle à l'axe du cylindre, en d'autres termes un mouvement aérodynamique du gaz de type swirl. Cette inclinaison peut se traduire par une rotation du conduit d'admission au niveau de son extrémité (l'extrémité du conduit d'admission est alors vrillée), ce qui favorise le mouvement aérodynamique du gaz de type swirl. De plus, cette réalisation permet de réaliser un mouvement aérodynamique du gaz de type swirl sans aucun appendice particulier de type masque, volet ou lame. De plus, l'architecture de ce dispositif d'admission ne présente aucune contrainte supplémentaire pour une implantation dans une culasse de moteur à combustion interne monocylindre ou multicylindre.

L'inclinaison selon un angle α compris entre 0 et 45° permet la génération d'un mouvement aérodynamique du gaz de type swirl. Au-delà de 45°, la géométrie du conduit d'admission est complexe et difficile à réaliser.

Par combinaison des mouvements aérodynamiques du gaz de type tumble et de type swirl, le dispositif d'admission du gaz selon l'invention permet un mouvement aérodynamique du gaz de type swumble dans le cylindre, ce qui permet de bénéficier d'une excellente homogénéisation et d'une meilleure vitesse de combustion grâce à un niveau de turbulence plus élevé lors de la phase de compression que ce qu'on observe avec les meilleurs moteurs à allumage commandé actuels.

Selon un aspect de l'invention, la section de passage du conduit d'admission peut avoir une forme sensiblement rectangulaire, avec les coins arrondis. Dans ce cas, l'intersection du conduit d'admission et la calibration de la soupape est formée par quatre arêtes : une du côté de l'intrados, une sur l'extrados, et deux latérales.

Selon un exemple de ce mode de réalisation, la section de passage rectangulaire du conduit d'admission au niveau de l'intersection avec la calibration de soupape est inclinée par rapport à la direction de la face feu. En d'autres termes, aucune des arrêtes de la section de passage rectangulaire n'est parallèle ou perpendiculaire à un plan parallèle à la face feu.

Selon l'invention, les deux conduits d'admission sont dissymétriques. Les angles α de chaque conduit d'admission sont distincts. En d'autres termes, les génératrices formées par l'intersection entre la calibration et l'intrados des deux conduits d'admission ne sont pas parallèles. Cette dissymétrie permet une bonne orientation du mouvement aérodynamique du gaz de type swumble dans le cylindre, en particulier en fin de compression : le mouvement aérodynamique du gaz se place dans une conformation plus proche du mouvement aérodynamique du gaz de type tumble ce qui maximise la création d'énergie cinétique turbulente. De plus, l'architecture du dispositif d'admission selon l'invention ne présente aucune contrainte supplémentaire pour une implantation dans une culasse d'un moteur, ce qui est un avantage notable en comparaison avec les solutions actuelles pour obtenir un mouvement aérodynamique du gaz de type swumble.

De préférence, les deux conduits peuvent être sensiblement parallèles.

Avantageusement, les deux conduits peuvent comprendre des moyens identiques pour générer un mouvement aérodynamique de type tumble.

Ces deux caractéristiques facilitent la conception du dispositif d'admission de gaz dans le cylindre.

Selon un mode de réalisation de l'invention, la différence δ entre les angles α des deux conduits d'admission peut être un angle non nul compris entre 0 et 45°, de préférence entre 0 et 15°, et préférentiellement entre 1 et 15°. Ces plages angulaires permettent d'optimiser la bonne orientation du mouvement aérodynamique du gaz de type swumble dans le cylindre.

Conformément à une mise en oeuvre de l'invention, le conduit d'admission qui est incliné de l'angle α le plus élevé est le conduit d'admission générant le mouvement aérodynamique du gaz dans le cylindre dont la direction est plus proche de l'axe (du centre) du cylindre. Ce conduit d'admission peut alors être appelé conduit intérieur, le deuxième conduit d'admission peut alors être appelé conduit extérieur. En d'autres termes, le conduit d'admission dont le mouvement aérodynamique du gaz en sortie se rapproche de l'axe du cylindre est incliné d'un angle α supérieur à l'angle α du conduit d'admission dont le mouvement aérodynamique du gaz en sortie se rapproche d'une paroi du cylindre. Ainsi, le conduit intérieur génère un mouvement aérodynamique de type swirl plus important que le conduit extérieur, et le conduit extérieur génère un mouvement aérodynamique du gaz plus proche d'un mouvement aérodynamique de type tumble. Toutefois, la paroi du cylindre (proche du conduit extérieur) enroule et redirige le mouvement aérodynamique du gaz issu du conduit extérieur vers l'axe du cylindre et s'ajoute au mouvement aérodynamique de type swumble. De cette manière, le flux de gaz provenant du conduit intérieur oriente fortement l'écoulement vers un mouvement aérodynamique de gaz de type swumble. Cette configuration permet un gain significatif en turbulence au sein du cylindre, au point mort haut par rapport à une configuration symétrique des conduits d'admission, ce qui permet un gain en rendement de combustion.

Le gaz est un comburant ou un mélange carburé (cas de l'injection indirecte), et peut comprendre notamment de l'air à pression ambiante, de l'air suralimenté, un mélange d'air (suralimenté ou non) et de gaz brûlés.

Selon un mode de réalisation de l'invention, l'angle α peut être compris entre 0 et 20°, et de manière préférée entre 0 et 16°. Ces plages angulaires permettent d'optimiser le mouvement aérodynamique du gaz de type swirl, et ainsi d'optimiser les mouvements aérodynamiques du gaz combinées de type swumble. En raison de la différence angulaire des deux inclinaisons, au moins un angle α d'un conduit d'admission est non nul. De préférence, l'angle α d'au moins un conduit d'admission est supérieur ou égal à 5°. En dessous de 5°, l'inclinaison est insuffisante pour avoir une influence significative sur le mouvement aérodynamique du gaz dans le cylindre.

Selon un mode de réalisation préféré, l'angle α peut être non nul pour les deux conduits d'admission. Ce mode de réalisation permet de générer un mouvement aérodynamique du gaz de type swumble plus important.

De préférence, l'angle δ est compris entre 0° et la valeur de l'angle α la plus élevée entre les deux conduits (bornes exclues). En d'autres termes, on peut écrire l'inégalité : 0< δ< αₘₐₓ avec αₘₐₓ la valeur la plus élevée entre les deux conduits.

Conformément à une mise en oeuvre de l'invention, les moyens de déviation du gaz peuvent être constitués uniquement par la forme du conduit d'admission. Ainsi, aucun élément actif ou passif ne vient entraver le passage du gaz dans le conduit d'admission.

Selon un premier exemple de réalisation, les moyens de déviation du gaz peuvent comprendre une forme de tremplin sur le profil inférieur de chaque conduit d'admission. Cette forme de tremplin peut être obtenue par une variation de concavité du profil inférieur du conduit d'admission. La forme de tremplin favorise le décollement du flux de gaz dans le conduit d'admission et le dirige vers la partie supérieure du conduit d'admission et donc vers la partie supérieure du cylindre afin de maximiser le mouvement aérodynamique du gaz de type tumble.

Selon un deuxième exemple de réalisation (pouvant être combiné avec le premier exemple de réalisation), les moyens de déviation du gaz peuvent comprendre une convergence de la section de passage à proximité de la calibration de la soupape. En d'autres termes la section de passage de chaque conduit d'admission se réduit vers son extrémité proche de la calibration de la soupape. Cette convergence entraîne une accélération du flux de gaz favorable aux aspects remplissage et mouvement aérodynamique du gaz.

Selon un troisième exemple de réalisation (pouvant être combiné avec le premier et/ou le deuxième exemple de réalisation), les moyens de déviation du gaz peuvent comprendre une inclinaison de chaque conduit d'admission. Cette inclinaison de chaque conduit d'admission peut être définie par un angle de tangente au point d'intersection du conduit d'admission avec la calibration compris entre 0 et 45°. Cette inclinaison peut être couplée à la pente de la partie supérieure de la chambre de combustion du cylindre. L'inclinaison du conduit d'admission permet d'incliner le flux de gaz entrant dans le cylindre pour former un mouvement aérodynamique du gaz de type tumble. Par exemple, une optimisation du mouvement aérodynamique de gaz de type tumble peut être atteinte par une tangence entre l'angle du conduit d'admission et l'angle de la pente de la partie supérieure de la chambre de combustion.

Selon un aspect de l'invention, chaque conduit d'admission peut comprendre un masque d'admission obturant partiellement l'extrémité du conduit d'admission qui débouche dans le cylindre. Se définit comme masque d'admission, un usinage spécifique dans la chambre de combustion à proximité de l'emplacement des sièges de soupapes admission, qui permet de bloquer le passage sur une partie de la section de passage du conduit d'admission au niveau du siège afin d'accélérer le gaz et donc augmenter la turbulence dans la chambre de combustion.

Selon un aspect de l'invention, le dispositif d'admission de gaz peut être de type siamois. En d'autres termes, le conduit siamois d'admission comporte une unique entrée et deux sorties dirigées vers le cylindre, chacune des sorties comportant une soupape d'admission et une calibration de soupape d'admission. Le conduit siamois d'admission est formé de deux conduits d'admission possédant les caractéristiques décrites précédemment pour former un mouvement aérodynamique du gaz de type swumble dans le cylindre. Ce type de dispositif siamois d'admission, adapté pour les cylindres pourvus de deux soupapes d'admission, permet de simplifier la conception du plénum d'admission (le plénum d'admission est le volume en amont des conduits d'admission).

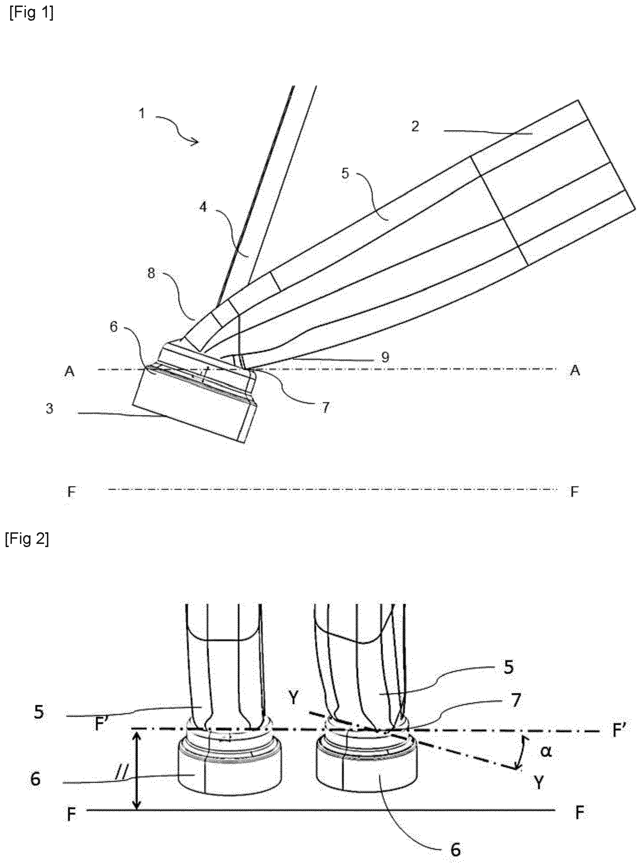

La figure 1 illustre, schématiquement et de manière non limitative, un dispositif d'admission 1 selon un mode de réalisation de l'invention. La figure 1 est une vue de côté en vue de fonctionnement du dispositif d'admission 1. Sur cette figure, un seul conduit d'admission 5 est illustré, étant donné que les deux conduits d'admission sont sensiblement parallèles et distants selon une direction perpendiculaire au plan de la figure. Le dispositif d'admission 1 comporte un conduit d'admission 5, une soupape 4 introduite dans le conduit d'admission, et une calibration 6 de la soupape d'admission. L'extrémité de la soupape d'admission 4 assurant le passage du gaz pour son ouverture n'est pas représentée. Le conduit d'admission 5 comporte une entrée de gaz 2 et une sortie de gaz 3, dans laquelle sont disposées la soupape d'admission 4 et sa calibration 6.

Le dispositif d'admission 1 comporte en outre des moyens de déviation du gaz pour générer un mouvement aérodynamique du gaz au sein du cylindre selon une direction perpendiculaire à l'axe du cylindre (mouvement aérodynamique du gaz de type tumble). Ces moyens de déviation du gaz comportent une convergence 8 de la section de passage du conduit d'admission 5 à proximité de la calibration 6 de la soupape. Cette convergence 8 correspond à une réduction de la section de passage à proximité de la calibration 6 de soupape. De plus, les moyens de déviation du gaz comprennent un tremplin 9 formé sur le profil inférieur du conduit d'admission 5 par une variation de concavité du profil inférieur du conduit d'admission 5. En outre, les moyens de déviation du gaz comprennent l'inclinaison du conduit d'admission 5 définie par la tangente au point d'intersection 7 du conduit d'admission 5 avec la calibration 6, et une direction AA. Sur cette figure, est représentée également une droite FF appartenant au plan de la face feu. La direction AA est parallèle à la droite FF et permet de définir l'inclinaison du conduit d'admission 5.

La figure 2 illustre, schématiquement et de manière non limitative, des vues partielles de l'intrados (face inférieure) d'un conduit d'admission. La figure 2 est dans un plan perpendiculaire à la face feu (en position de fonctionnement du dispositif d'admission). La figure de gauche correspond à un conduit selon l'art antérieur sans moyens de déviation du gaz pour former un mouvement aérodynamique du gaz de type swirl. La figure de droite correspond à un dispositif selon une variante de l'invention avec, au niveau de l'intrados, une inclinaison de l'intersection entre le conduit d'admission et la calibration de soupape pour former un mouvement aérodynamique du gaz de type swirl. Pour le mode de réalisation illustré, la section du conduit (conduit d'admission) est sensiblement rectangulaire.

Sur ces figures, la droite FF appartient au plan de la face feu (définie par le cylindre non représenté), et la direction F'F' est une droite appartenant à un plan parallèle à la face feu FF passant par un point d'intersection entre le conduit d'admission 5 et la calibration 6 de la soupape d'admission.

Selon l'art antérieur illustré sur la figure de gauche, l'intersection 7 entre le conduit d'admission 5 et la calibration 6 de la soupape d'admission est un segment de droite confondu avec la droite F'F'.

Au contraire, selon l'invention illustrée sur la figure de droite, l'intersection 7 entre le conduit d'admission 5 et la calibration 6 de la soupape d'admission forme un segment de droite porté par une génératrice rectiligne d'axe YY inclinée d'un angle α par rapport au plan F'F'. Cet angle α non nul est compris entre 0 et 45°. On peut observer sur la figure de droite que cette inclinaison entraîne, à proximité de l'intersection avec la calibration de soupape, une légère rotation du conduit d'admission 2, qui a une section de passage sensiblement rectangulaire.

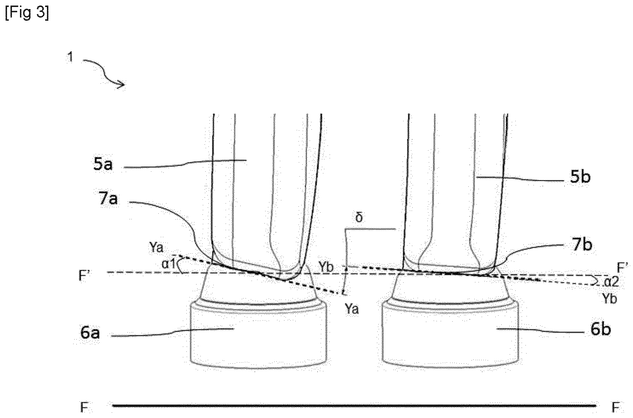

La figure 3 illustre, schématiquement et de manière non limitative, une vue partielle de l'intrados (face inférieure) d'un dispositif d'admission 1 selon l'un mode de réalisation de l'invention. La figure 3 est dans un plan perpendiculaire à la face feu (en position de fonctionnement du dispositif d'admission). Le dispositif d'admission 1 comporte un premier conduit d'admission 5a et un deuxième conduit d'admission 5b. Les deux conduits d'admission 5a et 5b sont sensiblement parallèles. Une calibration 6a est prévue à l'extrémité du premier conduit d'admission 5a, et une calibration 6b est prévue à l'extrémité du deuxième conduit d'admission 5b.

Sur cette figure, la droite FF appartient au plan de la face feu (définie par le cylindre non représenté), et la direction F'F' est une droite appartenant à un plan parallèle à la face feu FF passant par un point d'intersection entre les conduits d'admission 5a et 5b et les calibrations 6a et 6b de la soupape d'admission.

L'intersection 7a entre le premier conduit d'admission 5a et la calibration 6a de la soupape d'admission forme un segment de droite porté par une génératrice YaYa inclinée d'un angle α1 par rapport au plan F'F'. L'intersection 7b entre le deuxième conduit d'admission 5b et la calibration 6b de la soupape d'admission forme un segment de droite porté par une génératrice YbYb inclinée d'un angle α2 par rapport au plan F'F', l'angle α2 est strictement inférieur à l'angle α1. La différence angulaire δ (non nulle) entre les génératrices YaYa et YbYb est notée δ, qui est comprise entre 0 et 45°, de préférence en tre 0 et 15°.

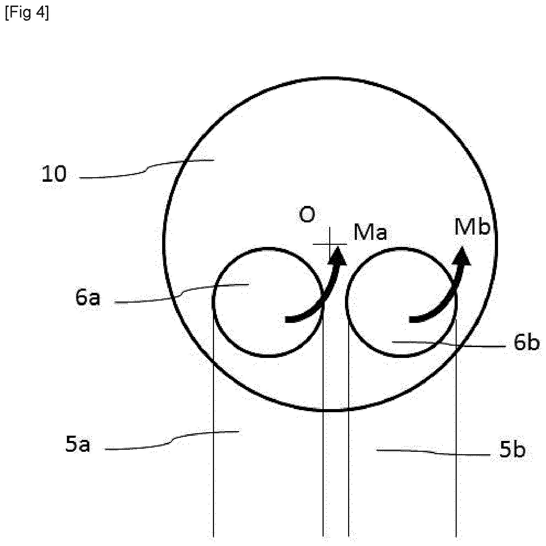

La figure 4 illustre, schématiquement et de manière non limitative, une vue de dessus d'un cylindre 10 équipé d'un dispositif d'admission selon un mode de réalisation de l'invention. Sur cette figure, le dispositif d'échappement n'est pas représenté. Le dispositif d'admission comprend un premier conduit d'admission 5a et un deuxième conduit d'admission 5b. Une calibration 6a est prévue à l'extrémité du premier conduit d'admission 5a, elle débouche dans le cylindre 10. Une calibration 6b est prévue à l'extrémité du deuxième conduit d'admission 5b, elle débouche dans le cylindre 10. Sur cette figure, on a représenté de manière schématique par les flèches Ma et Mb le mouvement aérodynamique du gaz dans le cylindre en sortie respectivement du premier conduit d'admission 5a et du deuxième conduit d'admission 5b. Le mouvement aérodynamique du gaz Ma en sortie du premier conduit d'admission 5a se rapproche du centre O du cylindre dans le plan de la figure (le point O appartient à l'axe du cylindre), et le mouvement aérodynamique du gaz Mb en sortie du deuxième conduit d'admission 5b se rapproche de la paroi du cylindre. Ainsi, le premier conduit d'admission 5a est le conduit intérieur du dispositif d'admission, et le deuxième conduit d'admission 5b est le conduit extérieur du dispositif d'admission. Selon un mode de réalisation, l'angle α du premier conduit d'admission 5a est supérieur à l'angle α du deuxième conduit d'admission 5b. Dans ce cas, la figure 4 est une vue de dessus du dispositif d'admission de la figure 3.

L'invention concerne également un ensemble comprenant un cylindre d'un moteur à combustion interne et dispositif d'admission selon l'une des variantes ou des combinaisons de variantes décrites précédemment.

De plus, la présente invention concerne un moteur à combustion interne comportant au moins un cylindre, chaque cylindre étant pourvu :
- d'au moins un dispositif d'admission selon l'une des variantes ou l'une des combinaisons de variantes décrites précédemment, pour l'admission d'un gaz dans le cylindre,
- d'au moins un dispositif d'échappement, pour évacuer les gaz brûlés du cylindre, le dispositif d'échappement est avantageusement équipé d'une soupape d'échappement,
- d'un piston ayant un mouvement de translation rectiligne alternatif dans le cylindre pour générer une énergie mécanique à partir de la combustion (par rotation d'un vilebrequin),
- de moyens d'injection de carburant, pour générer une combustion.

Selon un mode de réalisation, les moyens d'injection de carburant peuvent être des moyens d'injection directe, c'est-à-dire que les moyens d'injection de carburant sont disposés directement dans le cylindre.

Alternativement, les moyens d'injection de carburant peuvent être des moyens d'injection indirecte, c'est-à-dire que les moyens d'injection de carburant sont disposés dans le dispositif d'admission.

Selon une mise en oeuvre de l'invention, le moteur à combustion interne est un moteur à allumage commandé. Dans ce cas, le moteur comporte en outre au moins une bougie pour générer la combustion du mélange gaz et carburant.

Alternativement, le moteur à combustion interne est un moteur à allumage par compression. Dans ce cas, le moteur ne comporte aucune bougie pour générer la combustion du mélange gaz et carburant.

Le moteur à combustion interne peut comporter une pluralité de cylindres, notamment 3, 4, 5 ou 6 cylindres.

De préférence, le moteur à combustion peut être un moteur à quatre soupapes par cylindre (deux soupapes d'admission et deux soupapes d'échappement).

En outre, la présente invention concerne l'utilisation d'un moteur à combustion interne selon l'une des variantes ou combinaison de variantes décrites précédemment selon un cycle de Miller ou un cycle d'Atkinson.

Le cycle d'Atkinson est le cycle thermodynamique standard utilisé dans les moteurs à combustion variable.

Le cycle de Miller est un cycle thermodynamique se caractérisant par une fermeture des soupapes d'admission avant le point mort bas du piston lors de la phase admission. Cela permet d'avoir un travail récupéré plus important en plus d'un refroidissement de la charge admise. Le dispositif d'admission selon l'invention est particulièrement adapté pour une utilisation en cycle dit Miller sur une plage étendue de fonctionnement grâce à la génération d'un mouvement aérodynamique du gaz de type swumble.

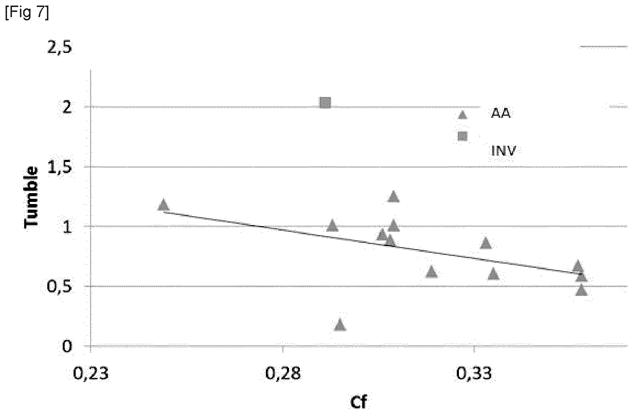

La figure 7 est un graphique du coefficient de Tumble en fonction d'un coefficient de perméabilité Cf pour un cycle de Miller. Le coefficient de tumble est défini comme le ratio de la vitesse angulaire du gaz autour du centre de masse dans la direction x (direction perpendiculaire à l'axe du cylindre) par rapport à la vitesse angulaire du vilebrequin et le coefficient de perméabilité correspond à la capacité du conduit d'admission à laisser passer un débit d'air par rapport à la section de passage disponible. Le coefficient de perméabilité est donc lié au remplissage du cylindre. Sur la figure, les conduits d'admission du marché AA (selon l'art antérieur) sont représentés par des triangles, et le dispositif d'admission selon l'invention INV est représenté par un carré. On remarque que le dispositif d'admission selon l'invention INV permet un meilleur compromis ente coefficient de tumble élevé et coefficient de perméabilité que les solutions de l'art antérieur AA. En effet, pour un coefficient de perméabilité Cf identique, le coefficient de Tumble obtenu par le conduit d'admission selon l'invention est doublé par rapport au conduit d'admission selon l'art antérieur.

Le moteur à combustion interne selon l'invention peut être utilisé dans le domaine des applications embarquées, tels que les domaines routier, maritime ou aéronautique, ou dans le domaine des installations stationnaires, comme un groupe électrogène.

### Exemples

Les caractéristiques et avantages du procédé selon l'invention apparaîtront plus clairement à la lecture de l'exemple comparatif ci-après.

Pour cet exemple comparatif, on compare deux dispositifs d'admission comportant chacun deux conduits d'admission sensiblement parallèle avec des moyens identiques pour générer un mouvement aérodynamique de type tumble et des moyens distincts pour générer un mouvement aérodynamique du gaz de type swirl. En effet, le premier dispositif d'admission, non conforme à l'invention, comporte deux conduits d'admission symétriques avec des angles α identiques, et le deuxième dispositif d'admission, conforme à l'invention, comporte deux conduits d'admission dissymétriques avec des angles α distincts, et de telle sorte que l'angle α1 du conduit intérieur soit supérieur à l'angle α2 du conduit extérieur. Pour l'exemple comparatif, l'angle α1 a la même valeur que l'angle α de l'exemple non conforme à l'invention, et l'angle α2 est nul.

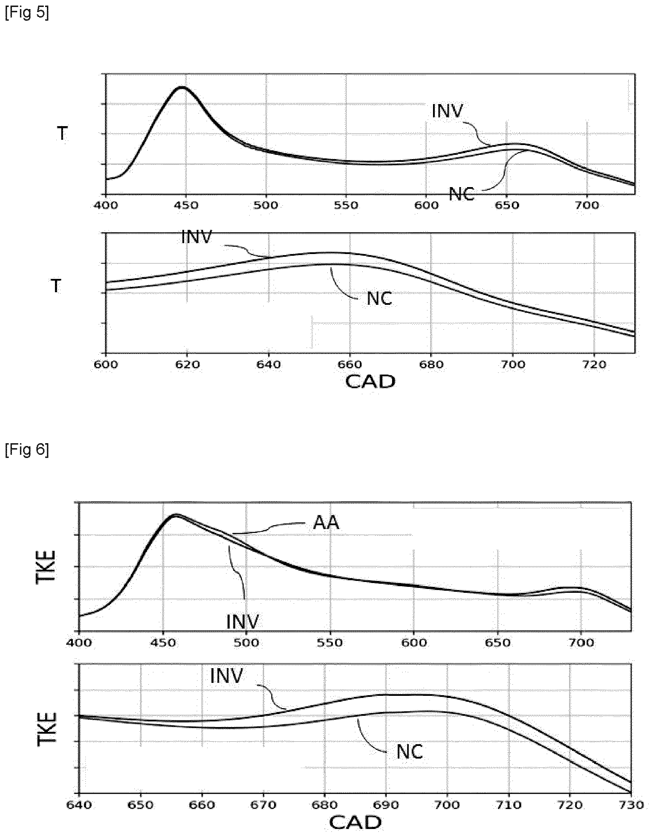

La figure 5 représente le tumble T pour chaque type d'admission, en fonction de l'angle vilebrequin CAD (« crank angle degree »). Le nombre de tumble dans une direction x est défini comme le ratio de la vitesse angulaire du gaz autour du centre de masse dans la direction x (direction perpendiculaire à l'axe du cylindre) par rapport à la vitesse angulaire du vilebrequin. Le nombre de tumble est un nombre sans dimension. La courbe relative au dispositif d'admission non conforme à l'invention est notée NC, et la courbe relative au dispositif selon un mode de réalisation de l'invention est notée INV. La figure du bas est un zoom de la figure du haut pour une plage de CAD comprise entre 600 et 740. On remarque un gain en nombre tumble pour le dispositif d'admission selon l'invention par rapport au dispositif d'admission non conforme à l'invention.

La figure 6 représente l'énergie cinétique turbulente TKE pour chaque type d'admission, en fonction de l'angle vilebrequin CAD (« crank angle degree »). L'énergie cinétique turbulente TKE représente la quantité d'énergie "enfermée" dans la masse d'air. La courbe relative au dispositif d'admission non conforme à l'invention est notée NC, et la courbe relative au dispositif selon un mode de réalisation de l'invention est notée INV. La figure du bas est un zoom de la figure du haut pour une plage de CAD comprise entre 600 et 740. On remarque un gain en énergie cinétique turbulente à proximité du point mort haut. Ce qui traduit une meilleure conservation de l'énergie de l'écoulement et une meilleure transformation en énergie cinétique turbulente en fin de compression à proximité du point mort haut, et ce spécifiquement pour des fonctionnement sur un cycle de Miller avancé.

Ainsi, des gains significatifs de rendement de combustion sont obtenus avec l'implantation des conduits d'admission selon l'invention.

## Revendications

1. Dispositif d'admission de gaz pour un cylindre d'un moteur à combustion interne, ledit dispositif d'admission de gaz (1) comprenant deux conduits d'admission (5a, 5b), une soupape d'admission (4) disposée dans chaque conduit d'admission (5a, 5b), une calibration de soupape (6a, 6b) disposée à une extrémité de chaque conduit d'admission (5a, 5b) et dirigée vers la face feu (FF) dudit cylindre, et au sein de chaque conduit d'admission (5a, 5b), des moyens pour générer un mouvement aérodynamique dudit gaz au sein dudit cylindre autour d'un axe sensiblement perpendiculaire à l'axe dudit cylindre, dans lequel, à l'intrados de chacun desdits deux conduits d'admission (5a, 5b), **caractérisé en ce que** l'intersection (7a, 7b) entre chaque conduit d'admission (5a, 5b) et ladite calibration (4) forme un segment de droite porté par une génératrice rectiligne (YaYa, YbYb) formant un angle α compris entre 0 et 45° par rapport à un plan parallèle à ladite face feu (FF) dudit cylindre passant par un point d'intersection entre ledit conduit d'admission et ladite calibration, lesdits angles α desdits deux conduits d'admission (5a, 5b) étant distincts.

2. Dispositif d'admission selon la revendication 1, dans lequel la différence entre lesdits angles α desdits deux conduits d'admission (5a, 5b) est un angle δ non nul compris entre 0 et 45°, de préférence entre 0 et 15°, et préféren tiellement entre 1 et 15°.

3. Dispositif d'admission selon l'une des revendications précédentes, dans lequel ledit conduit d'admission (5a) pour lequel l'angle α le plus élevé est le conduit d'admission générant le mouvement aérodynamique du gaz dans le cylindre dont la direction est la plus proche de l'axe (O) dudit cylindre.

4. Dispositif d'admission selon l'une des revendications précédentes, dans lequel ledit angle α desdits deux conduits d'admission (5a, 5b) est compris entre 0 et 20°, de préférence entre 0 et 16°.

5. Dispositif d'admission selon l'une des revendications précédentes, dans lequel ledit angle α est non nul pour lesdits deux conduits d'admission (5a, 5b).

6. Dispositif d'admission selon l'une des revendications précédentes, dans lequel lesdits moyens pour générer un mouvement aérodynamique du gaz au sein dudit cylindre autour d'un axe sensiblement perpendiculaire à l'axe dudit cylindre sont constitués par la forme de chacun desdits deux conduits d'admission, notamment au moyen d'une forme de tremplin (9), et/ou d'une convergence (8) de la section de passage desdits deux conduits d'admission (5a, 5b), et/ou une inclinaison desdits deux conduits d'admission (5a, 5b).

7. Dispositif d'admission selon l'une des revendications précédentes, dans lequel lesdits deux conduits d'admission (5a, 5b) forment un conduit siamois d'admission comportant deux sorties de gaz vers ledit cylindre et deux soupapes d'admission.

8. Dispositif d'admission selon l'une des revendications précédentes, dans lequel chacun desdits deux conduits d'admission (5a, 5b) comporte un masque qui obture partiellement lesdits deux conduits d'admission (5a, 5b).

9. Dispositif d'admission selon l'une des revendications précédentes, dans lequel lesdits deux conduits d'admission (5a, 5b) sont sensiblement parallèles.

10. Moteur à combustion interne comportant au moins un cylindre pourvu au moins d'un dispositif d'admission (1) selon l'une des revendications précédentes, d'au moins un dispositif d'échappement, et de moyens d'injection de carburant.

## Patentansprüche

1. Gaseinlassvorrichtung für einen Zylinder einer Brennkraftmaschine, wobei die Gaseinlassvorrichtung (1) zwei Einlasskanäle (5a, 5b), je ein in jedem Einlasskanal (5a, 5b) angeordnetes Einlassventil (4), je ein Ventilkalibrierelement (6a, 6b), das an einem Ende jedes Einlasskanals (5a, 5b) angeordnet und zur Brennseite (FF) des Zylinders gerichtet ist, und innerhalb jedes Einlasskanals (5a, 5b) Mittel zum Erzeugen einer aerodynamischen Bewegung des Gases innerhalb des Zylinders um eine zur Achse des Zylinders im Wesentlichen senkrechte Achse umfasst, **dadurch gekennzeichnet, dass** auf der Unterseite jedes der zwei Einlasskanäle (5a, 5b) der Schnitt (7a, 7b) zwischen dem jeweiligen Einlasskanal (5a, 5b) und dem Kalibrierelement (4) einen Geradenabschnitt bildet, der auf einer geraden Erzeugenden (YaYa, YbYb) liegt, die einen Winkel α zwischen 0 und 45° in Bezug auf eine zur Brennseite (FF) des parallele Ebene bildet, die durch einen Schnittpunkt zwischen dem Einlasskanal und dem Kalibrierelement verläuft, wobei die Winkel α der zwei Einlasskanäle (5a, 5b) verschieden sind.

2. Einlassvorrichtung nach Anspruch 1, wobei die Differenz zwischen den Winkeln α der zwei Einlasskanäle (5a, 5b) ein von null verschiedener Winkel δ ist, der zwischen 0 und 45°, vorzugsweise zwischen 0 und 15° und stärker bevorzugt zwischen 1 und 15° liegt.

3. Einlassvorrichtung nach einem der vorhergehenden Ansprüche, wobei der Einlasskanal (5a), für den der Winkel α der größere ist, der Einlasskanal ist, der die aerodynamische Bewegung des Gases in dem Zylinder erzeugt, dessen Richtung der Achse (O) dieses Zylinders am nächsten ist.

4. Einlassvorrichtung nach einem der vorhergehenden Ansprüche, wobei der Winkel α der zwei Einlasskanäle (5a, 5b) zwischen 0 und 20° liegt, vorzugsweise zwischen 0 und 16°.

5. Einlassvorrichtung nach einem der vorhergehenden Ansprüche, wobei der Winkel α für die zwei Einlasskanäle (5a, 5b) von null verschieden ist.

6. Einlassvorrichtung nach einem der vorhergehenden Ansprüche, wobei die Mittel zum Erzeugen einer aerodynamischen Bewegung des Gases innerhalb des Zylinders um eine zur Achse des Zylinders im Wesentlichen senkrechte Achse durch die Form jedes der zwei Einlasskanäle gebildet werden, insbesondere mittels einer Sprungschanzenform (9), und/oder durch eine allmähliche Verengung (8) des Durchlassquerschnitts der zwei Einlasskanäle (5a, 5b) und/oder eine Neigung der zwei Einlasskanäle (5a, 5b).

7. Einlassvorrichtung nach einem der vorhergehenden Ansprüche, wobei die zwei Einlasskanäle (5a, 5b) einen gegabelten Einlasskanal bilden, der zwei Gasauslässe zum Zylinder hin und zwei Einlassventile aufweist.

8. Einlassvorrichtung nach einem der vorhergehenden Ansprüche, wobei jeder der zwei Einlasskanäle (5a, 5b) eine Maske aufweist, welche die zwei Einlasskanäle (5a, 5b) teilweise verschließt.

9. Einlassvorrichtung nach einem der vorhergehenden Ansprüche, wobei die zwei Einlasskanäle (5a, 5b) im Wesentlichen parallel sind.

10. Brennkraftmaschine, welche mindestens einen Zylinder aufweist, der mindestens mit einer Einlassvorrichtung (1) nach einem der vorhergehenden Ansprüche, mindestens einer Abgasvorrichtung und Kraftstoffeinspritzmitteln versehen ist.

## Claims

1. Gas intake device for a cylinder of an internal combustion engine, said gas intake device (1) comprising two intake ducts (5a, 5b), an intake valve (4) arranged in each intake duct (5a, 5b), a valve calibration part (6a, 6b) arranged at one end of each intake duct (5a, 5b) and directed towards the combustion face (FF) of said cylinder, and, within each intake duct (5a, 5b), means for generating an aerodynamic movement of said gas within said cylinder about an axis substantially perpendicular to the axis of said cylinder, **characterized in that**, on the intrados of each of said two intake ducts (5a, 5b), the intersection (7a, 7b) between each intake duct (5a, 5b) and said calibration part (4) forms a straight-line segment borne by a rectilinear generatrix (YaYa, YbYb) forming an angle α of between 0 and 45° with respect to a plane parallel to said combustion face (FF) of said cylinder and passing through a point of intersection between said intake duct and said calibration part, said angles α of said two intake ducts (5a, 5b) being different.

2. Intake device according to Claim 1, wherein the difference between said angles α of said two intake ducts (5a, 5b) is a non-zero angle δ of between 0 and 45°, preferably between 0 and 15°, and preferably between 1 and 15°.

3. Intake device according to either of the preceding claims, wherein said intake duct (5a) for which the angle α which is the greater is the intake duct generating the aerodynamic movement of the gas in the cylinder whose direction is the closest to the axis (O) of said cylinder.

4. Intake device according to one of the preceding claims, wherein said angle α of said two intake ducts (5a, 5b) is between 0 and 20°, preferably between 0 and 16°.

5. Intake device according to one of the preceding claims, wherein said angle α is non-zero for said two intake ducts (5a, 5b).

6. Intake device according to one of the preceding claims, wherein said means for generating an aerodynamic movement of the gas within said cylinder about an axis substantially perpendicular to the axis of said cylinder are formed by the shape of each of said two intake ducts, notably by means of a half-pipe shape (9), and/or of a convergence (8) of the passage cross section of said two intake ducts (5a, 5b), and/or an inclination of said two intake ducts (5a, 5b).

7. Intake device according to one of the preceding claims, wherein said two intake ducts (5a, 5b) form a Siamese intake duct comprising two gas outlets towards said cylinder and two intake valves.

8. Intake device according to one of the preceding claims, wherein each of said two intake ducts (5a, 5b) comprises a mask which partially closes off said two intake ducts (5a, 5b).

9. Intake device according to one of the preceding claims, wherein said two intake ducts (5a, 5b) are substantially parallel.

10. Internal combustion engine comprising at least one cylinder provided at least with an intake device (1) according to one of the preceding claims, with at least one exhaust device, and with fuel injection means.
